# EUROPEAN PATENT SPECIFICATION

(11) **EP 0 446 970 B1**
(45) Date of publication and mention of the grant of the patent: **22.09.1993**
(21) Application number: 91109002.5
(22) Date of filing: 11.08.1990
(51) Int. Cl.: B01D 15/00, G01N 30/60, G01N 30/24

(54) **A solid-phase extraction cartridge**
Extraktionspatrone mit Festphase
Cartouche d'extraction à phase solide

(30) Priority: 06.09.1989 US 403425
(43) Date of publication of application: 18.09.1991
(62) Divisional of application: 90115462.5
(73) Proprietor: Hewlett-Packard Company, Palo Alto, California 94304 (US)
(72) Inventor: Fogelman, Kimber D., Newark, DE 19711 (US); Engel, Steven J., Kennett Square, PA 19348 (US); Price, Thomas E., Hockessin, DE 19707 (US); Augenblick, Kurt, Wilmington, DE 19808 (US); Ganz, Avner, Newark, DE 19711 (US)
(74) Representative: Schoppe, Fritz, Dipl.-Ing.

(56) References cited:
- EP-A- 0 068 343
- EP-A- 0 266 542
- EP-A- 0 305 817
- CH-A- 509 591
- FR-A- 2 162 494
- GB-A- 2 115 716
- GB-A- 2 162 489
- US-A- 4 283 280

## Description

The present invention relates to a solid-phase extraction cartridge in accordance with the prior art portion of claim 1.

The use of solid-phase sorbents, e.g., bonded silica, to extract an isolate, usually a chemical compound dissolved or otherwise dispersed in a liquid sample, is known. See "Sorbent Extraction Technology" published in 1985 by Analytichem International Inc., Harbor City, CA 90710, and "Baker-10 SPE Applications Guide Vol. 1" published in 1982 by J.T. Baker Chemical Co., Phillipsburg, NJ 08865. It is also known to use disposable columns containing the sorbent between layers or discs of porous frit.

A problem with prepared, disposable columns filled with particulate sorbent between frit layers is the tendency of the packing to settle and form voids which, even when extremely small, can seriously distort the results of extraction and/or elution of the isolate. Radial compression techniques have been used to combat this problem. Rainin Instrument Co. provides packed columns with "Dynamax End-Fittings" which have a threaded axial compression nut that can be turned down prior to use to compress the frit layers and sorbent particles to eliminate voids. Such an end fitting does not lend itself to void elimination by simple axial compression of the end fittings.

GB-A-2115716 discloses a solid-phase extraction cartridge of the above-mentioned kind. This prior art cartridge is designed as a inner portion of a cartridge assembly comprising end fittings in the form of end cap nuts. The end caps of the cartridge having the form of plastic plugs are longer than the depth of the sealed recess in the column so as to contact the inner sides of the end cap nuts. On the other hand, the end cap nuts have threaded inner bores for engagement with the conduits. Thus, the end caps of this prior art cartridge merely serve for establishing a sealing connection between the column of the inner section of the cartridge assembly and the end fittings thereof. This reference does not deal with the object of eliminating the formation of voids in the solid-phase sorbent particles of the column.

EP-A-0305817 discloses a cartridge assembly for a chromatographic system. The cartridge assembly comprises an inner column surrounded by an outer housing in the form of a cylinder. The inner column contains sorbent particles and comprises two porous separation layers above and below the sorbent particles. Two pluggers are slideably arranged in the inner bore of the column and are in sealing contact with both the inner wall of the column and the upper or lower porous separation layers. Both pluggers have respective inner threads for engagement with an upper or lower screw member. The pluggers can be brought into pressing contact with the porous separation layers by suitably turning down the screw members into the inner bore of the column to thereby compress the sorbent particles to thus eliminate possible voids therein. Thus, this prior art technique is almost identical to the one as evaluated with reference to the packed columns of Rainin Instruments Company.

US-A-3,855,130 discloses another cartridge assembly for chromatography comprising an outer steel column and an inner glass column. The inner glass column contains sorbent particles and a lower porous separation layer. Threaded upper and lower nuts serve for exerting axial pressure against a lower gasket and an upper gasket and packing ring to sealingly engage the axial faces of both the inner glass pipe and the outer steel pipe. Thus, this reference does not deal with the problem of reducing possible voids in the packing material of the pipe.

US-A-4,283,280 discloses another cartridge assembly having an outer cylindrical cartridge holder surrounding an inner cartridge column. The column contains a packing or sorbent particles. A filter unit is arranged at the remote end of the column between the packing on one hand side and a plug at the other hand side. The plug serves for holding the filter unit and for sealingly abutting against the face of the column. Thus, this reference also does not deal with the object of eliminating possible voids in the packing.

GB-A-2,162,489 discloses a column for use in a chromatograph comprised of a metal tube, open at both ends and having shoulders facing each open end and a pair of elastic end plugs of frusto-conical shape which are sealed in place abutting against said shoulders by rolling the tube ends to compress against the frustum surface. Thus, this reference also does not deal with the problem of eliminating possible voids in the packing.

Starting from the above prior art, the present invention is based on the object of providing a solid-phase extraction cartridge of the above-mentioned type which allows an elimination of significant voids between the separation layers, has a simplified design and is suitable for automatic chromatographic processes.

This object is achieved by a solid-phase extraction cartridge in accordance with claim 1.

### Brief Description of Drawings

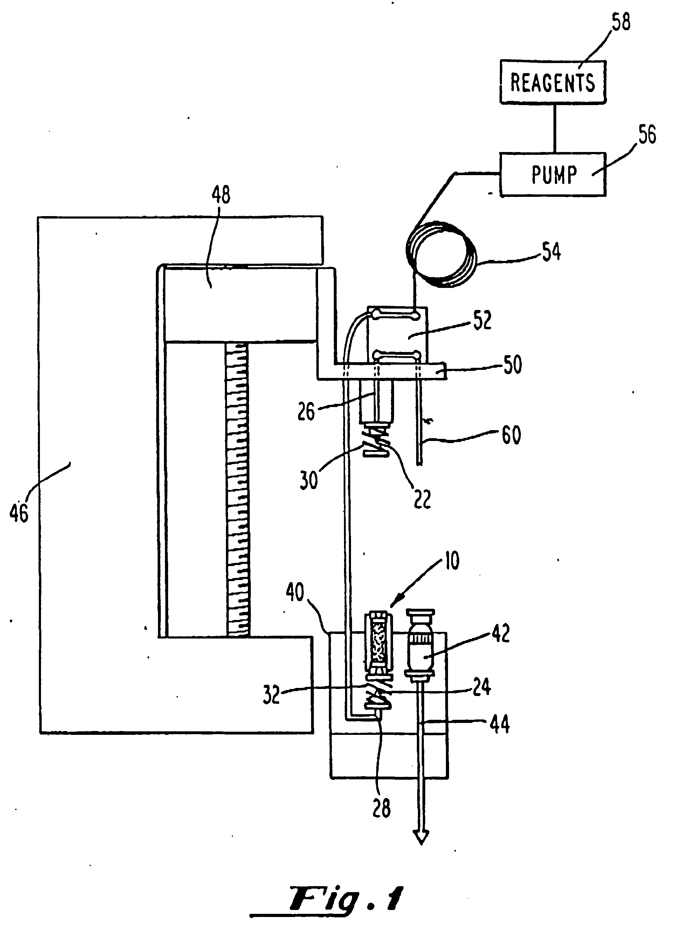

FIG. 1 is a schematic view of an extraction apparatus of this invention.

FIG. 2 is a sectional view of a column cartridge of this invention.

FIG. 3 is a partial sectional view of a column cartridge with an alternative end cap structure.

### Detailed Description of the Invention

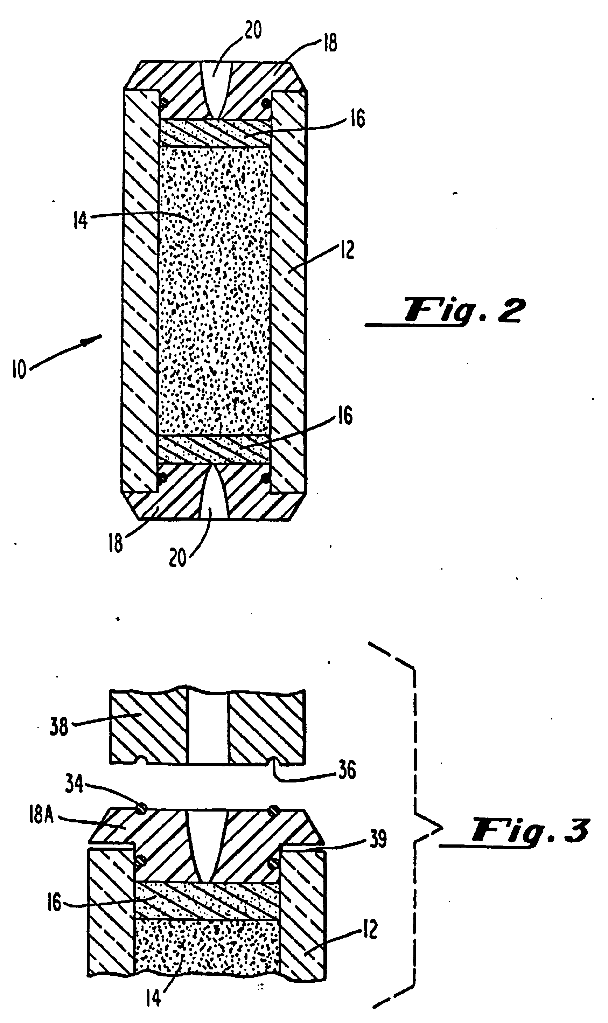

Referring now to the drawings, a cartridge column 10 is shown in FIG. 2 as having a glass column 12 packed with solid-phase sorbent 14 between two layers of frit 16. The frit permits the free passage of liquid but is rigid enough to provide a layer at each end to contain the sorbent 14. One can also use a screen or sieve instead of a frit layer.

At either end of the cartridge is an end cap 18, preferably made of a suitably inert material. The end caps in FIG. 2 are shown to have upper and lower, tapered female fittings 20 adapted to receive male sampling tips 22 and 24 on the liquid conduits 26 and 28. Both male sampling tips 22 and 24 are shown to be spring-loaded to provide for clamping, axial-pressure engagement to effect a seal at each end of cartridge column 10 and also provide for the force of the compressed springs 30 and 32 to assist in disengagement. The spring also accommodates a variety of column lengths. The end caps in FIG. 2 are shown in a tightly compressed position.

FIG 3 illustrates an alternative and preferred face-seal structure of the end cap 18A wherein o-ring washer 34 is provided to engage o-ring groove 36 in liquid conduit face 38 to effect a clamping, axial-pressure sealing engagement and easy disengagement with a liquid conduits 26 and 28. The end cap in FIG. 3 is shown with space 39 to permit the end cap to be compressed further to eliminate voids. It is also possible to use a flat gasket in place of an o-ring seal or to construct the entire end cap of a suitably compliant seal material.

The apparatus includes a base holder 40 for retaining the cartridge column 10 and sample vial 42 with a waste drain 44. An elevator 46 has a carriage 48 which can be moved up and down. The arrangement of the cartridge 10 and the sampling tips 22 and 24 is such that the movement of carriage 48 will engage and disengage conduits 26 and 28 with cartridge 10. Arm 50 on the carriage has the conduit 26 attached to the bottom and carries two-position four-port valve 52. Connected to one port of the valve 52 is a narrow tube coil 54 whose internal volume is about the same size as the desired liquid sample to be drawn from sample vial 42.

A positive-displacement, variable flow-rate pump 56 is connected to coil 54. A suitable type of pump is one that can compress a cylinder of liquid out through coil 54 or can, by reverse pumping, withdraw liquid from coil 54 up into the pumping cylinder (not shown). A suitable pump is a syringe pump, e.g., such as commercially available from Hamilton Instrument Co.

A source of reagents 58 is attached to the pump. The connection (not shown) between reagents 58 and pump 56 is such that the pump can be alternatively connected to a source of different reagents.

The carriage arm 50 can be lowered such that the upper and lower sampling tips 22 and 24 engage female fittings 20 in cartridge 10 and are compressed into sealing engagement against springs 30 and 32. The compressive, clamping force will also compress end caps 18 against frit layers 16 to remove any void above packing 14. If sample vial 42 is present on base 40, it will be penetrated by hollow needle 60 and will be located over waste drain 44. In the valve 52 position coil 54 is connected to conduit 28 and conduit 26 is connected to needle 60.

The geometry of column 10 can be important. Longer columns may provide better separation while wider columns provide larger sample capacity. Maintaining uniform column length may provide uniformity of results by controlling the linear velocity of elution. Vial size cartridges may contain as much as 500 mg of packing sorbent.

While the sorbent particles ordinarily act to physically adsorb or absorb the isolate, it is to be understood that sorbent particles may be used that chemically react with the sample to bond or retain the isolate which is to be removed.

The column may be of glass, medical-grade polypropylene, fluorocarbon polymer or other suitable material. The frit can be of inert materials such as fluorocarbon polymer, polyethylene, or stainless steel.

## Claims

1. A solid-phase extraction cartridge (10) comprising a column (12) containing solid-phase sorbent particles (14) with a porous separation layer (16) above and below said sorbent particles (14), and an end cap (18A) above and below said separation layers (16) with an aperture (20) therein permitting liquid to pass through,
characterized in
that said end caps (18A) have on their upper surface female fittings (20) and sealing means (34) adapted to receive under axial pressure sealing engagement conduits (38) for said liquid, and
that a space (39) is arranged between the lower side of a head of said end caps (18A) and a terminal face of said column (12) such that said end caps (18A) are compressible into said column (12) to eliminate significant voids between said separation layers upon the application of axial pressure through said conduits.

2. The cartridge defined in claim 1, characterized in
that the end caps (18A) are made of a suitably chemically inert polymer, preferably a fluorocarbon polymer.

3. The cartridge defined in claim 1 or 2, characterized in
that the column (12) consists of glass or a suitably chemically inert polymer.

4. The cartridge defined in one of the claims 1 to 3, characterized in
that said porous separation layer (16) is a layer of frit or a screen or a sieve.

5. The cartridge defined in one of the claims 1 to 4, characterized in
that the end caps sealing means are provided with Luer fittings (20) or a face seal (34) or a core seal.

6. The cartridge defined in one of the claims 1 to 5, characterized in
that the end caps sealing means include o-ring washers (34).

7. The cartridge defined in one of the claims 1 to 6, characterized in
that the frit (14) comprises fluorocarbon polymer particles.

## Patentansprüche

1. Eine Festphasenextraktionspatrone (10) mit einer Säule (12), welche sorbierende Partikel von fester Phase (14) enthält, mit einer porösen Trennschicht (16) oberhalb und unterhalb der sorbierenden Partikel (14) und mit je einer Endkappe (18A) oberhalb und unterhalb der Trennschichten (16) mit einer Öffnung (20) in dieser, um einen Flüssigkeitsdurchtritt zu ermöglichen, dadurch gekennzeichnet,
daß die Endkappen (18A) an ihrer Oberfläche weibliche Dichtungen (20) und eine Dichteinrichtung (34) aufweisen, die geeignet ist, um bei Axialdruck Dichteingriffnahmeleitungen (38) für die Flüssigkeit aufzunehmen, und
daß ein Abstand (39) zwischen der unteren Seite eines Kopfes der Endkappen (18A) und einer Endfläche der Säule (12) derart vorgesehen ist, daß die Endkappen (18A) in die Säule (12) hinein zusammengedrückt werden können, um nennenswerte Hohlräume zwischen den Trennschichten bei Anwendung des Axialdruckes durch die Leitungen zu beseitigen.

2. Die Patrone nach Anspruch 1, dadurch gekennzeichnet,
daß die Endkappen (18A) aus einem geeigneten, chemisch inerten Polymer, vorzugsweise aus einem Fluorkohlenstoffpolymer bestehen.

3. Die Patrone nach Anspruch 1 oder 2, dadurch gekennzeichnet,
daß die Säule (12) aus Glas oder einem geeigneten, chemisch inerten Polymer besteht.

4. Die Patrone nach einem der Ansprüche 1 bis 3, dadurch gekennzeichnet,
daß die poröse Trennschicht (16) eine Fritteschicht oder ein Schirm oder ein Sieb ist.

5. Die Patrone nach einem der Ansprüche 1 bis 4, dadurch gekennzeichnet,
daß die Endkappendichteinrichtungen mit Luer-Dichtungen (20) oder einer Endflächendichtung (34) oder einer Kerndichtung versehen sind.

6. Die Patrone nach einem der Ansprüche 1 bis 5, dadurch gekennzeichnet,
daß die Endkappendichteinrichtungen O-Ring-Dichtscheiben (34) umfassen.

7. Die Patrone nach einem der Ansprüche 1 bis 6, dadurch gekennzeichnet,
daß die Fritte (14) aus Fluorkohlenstoff-Polymer-Partikeln besteht.

## Revendications

1. Une cartouche d'extraction à phase solide (10) comprenant une colonne (12) contenant des particules de sorbant à phase solide (14) avec une couche de séparation poreuse (16) au-dessus et au-dessous desdites particules de sorbant (14) et un capuchon d'extrémité (18A) au-dessus et au-dessous desdites couches de séparation (16), avec une ouverture (20) dans ceux-ci permettant le passage de liquide, caractérisée en ce
que lesdits capuchons d'extrémité (18A) présentent, à leur surface supérieure, des raccords femelles (20) et des moyens d'étanchage (34) adaptés pour recevoir, sous pression axiale, des conduits venant en prise étanche (38) pour ledit liquide, et
qu'un espace (39) est disposé entre le côté inférieur d'une tête desdits capuchons d'extrémité (18A) et une face finale de ladite colonne (12), de manière que lesdits capuchons d'extrémité (18A) peuvent être comprimés dans ladite colonne (12) afin d'éliminer des vides importants entre lesdites couches de séparation à l'application d'une pression axiale par lesdits conduits.

2. La cartouche suivant la revendication 1, caractérisée en ce que les capuchons d'extrémité (18A) sont réalisés en un polymère chimiquement inerte approprié, de préférence un polymère fluorocarboné.

3. La cartouche suivant la revendication 1 ou 2, caractérisée en ce que la colonne (12) est en verre ou un polymère chimiquement inerte approprié.

4. La cartouche suivant l'une des revendications 1 à 3, caractérisée en ce que ladite couche de séparation poreuse (16) est une couche de fritte ou un écran ou un tamis.

5. La cartouche suivant l'une des revendications 1 à 4, caractérisée en ce que les moyens d'étanchage des capuchons d'extrémité sont pourvus de raccords Luer (20) ou d'un joint en surface (34) ou d'un joint central.

6. La cartouche suivant l'une des revendications 1 à 5, caractérisée en ce que les moyens d'étanchage des capuchons d'extrémité comportent des rondelles à joint torique (34).

7. La cartouche suivant l'une des revendications 1 à 6, caractérisée en ce que la fritte (14) comprend des particules de polymère fluorocarboné.
